# EUROPEAN PATENT APPLICATION

(11) **EP 4 492 775 A1**
(43) Date of publication of application: **15.01.2025**
(21) Application number: 24167750.9
(22) Date of filing: 28.03.2024
(51) Int. Cl.: H04N 9/73, H04N 23/88

(54) **DISTRIBUTED REAL-TIME AUTO WHITE BALANCE CORRECTION FOR ARTIFICIAL REALITY APPLICATIONS**

(30) Priority: 11.07.2023 US 202363513006 P; 25.03.2024 US 202418615124
(71) Applicant: Meta Platforms Technologies, LLC, Menlo Park, CA 94025 (US)
(72) Inventor: Bagheri, Saeid, Menlo Park (US); Mercurio, Cesare, Menlo Park (US); Delvecchio, Sean, Menlo Park (US)
(74) Representative: Murgitroyd & Company

(57) **Abstract**

Aspects of the present disclosure are directed to a process for applying, in a distributed manner, Auto White Balance (AWB) correction techniques to images acquired at an imaging device. AWB is used to adjust the color balance of an image to make the image look more natural and appealing to the viewer. AWB can neutralize color casts that may be present in an image, such as those caused by the lighting conditions or the camera's sensors. The absence of AWB correction can cause an image to have incorrect colors, such as a green tint, while a failure in AWB can often be perceived as the image having an incorrect color tint. In examples, at least a portion of the computational complexity involved in performing AWB correction techniques can be offloaded to a companion computation device, such as a coprocessing device.

## Description

### TECHNICAL FIELD

The present disclosure is directed to applying Auto White Balance (AWB) processing to still images and streaming video while offloading some AWB processing.

### BACKGROUND

Streaming video in a head-mounted display (HMD) involves delivering video content directly to the user's eyes via a wearable display device. This technology is often used in virtual reality (VR), mixed reality (MR), and augmented reality (AR) (together XR) applications, where users want to feel fully immersed in a simulated environment. In VR applications, the user is surrounded by a simulated environment, while in AR and MR applications, virtual objects are overlaid onto the real world. In both cases, streaming video to the HMD is essential for creating a seamless and immersive experience.

### SUMMARY

According to a first aspect, there is provided a method for performing distributed auto white balance corrections on an image acquired from an imaging device of a head-mounted display, the method comprising: receiving, at a coprocessing device via a network connection, the image from the imaging device of the head-mounted display which is external to the coprocessing device, wherein the head-mounted display had applied automated exposure correction to the received image; and wherein the head-mounted display locally generates auto white balance correction statistics for a version of the image, without the automated exposure correction applied to that version of the image, and provides the auto white balance correction statistics, via the network connection, to the coprocessing device; receiving, at the coprocessing device and separate from receiving the image, the auto white balance correction statistics generated by the head-mounted display; and applying, by the coprocessing device, at least one auto white balance correction technique to the image based on the received auto white balance correction statistics.

The method may further comprise providing the auto white balance corrected image back to the head-mounted display for output.

The auto white balance correction statistics may be generated, by the head-mounted display, for the version of the image that is a first-resolution image. A resolution of the image received from the imaging device may be greater than a resolution of the first-resolution image.

The generated auto white balance correction statistics may be generated to make adjustments, for the higher resolution set of pixels in the image received from the imaging device, based on the version of the image that is at the first-resolution.

The generated auto white balance correction statistics may include one or more of: a ratio of red pixels to green pixels; a ratio of blue pixels to green pixels; a distribution of red, green, and blue pixels throughout the image; an estimate of the ambient light temperature of the image; or any combination thereof.

The version of the image, for which the auto white balance correction statistics are generated, may be a region of the image which is less than the entire image.

The applied automated exposure correction may include generating one or more automated exposure correction statistics including one or more of: mean brightness of the image; standard deviation of one or more pixel values in the image; histogram or distribution of pixel values across the image; image contrast; image saturation; image exposure time; or any combination thereof.

The applied automated exposure correction may determine an exposure time and/or gain, that may be provided to the imaging device and used by the imaging device to acquire one or more subsequent images.

According to a second aspect, there is provided a computer-readable storage medium storing instructions that, when executed by a computing system, cause the computing system to carry out the method of the first aspect.

According to a third aspect, there is provided a computer-readable storage medium storing instructions that, when executed by a computing system, cause the computing system to carry out the method of the first aspect.

According to a fourth aspect, there is provided a computer program product comprising instructions which, when the program is executed by a computer, cause the computer to carry out the method of the first aspect.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations for performing distributed AWB correction on streaming or real-time video.
Figure 6 is a flow diagram illustrating a process used in some implementations for performing distributed AWB correction on a single high-resolution image captured by an imaging device.
Figure 7 is a conceptual diagram illustrating details of a system for performing distributed AWB correction on streaming or real-time video used in some implementations.
Figure 8 is a conceptual diagram illustrating details of a system for performing distributed AWB correction on a single high-resolution image captured by an imaging device used in some implementations.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to processes for applying, in a distributed manner, Auto White Balance (AWB) correction techniques to images acquired at an imaging device. AWB is used to adjust the color balance of an image to make the image look more natural and appealing to the viewer. AWB can neutralize color casts that may be present in an image, such as those caused by the lighting conditions or the camera's sensors. The absence of AWB correction can cause an image to have incorrect colors, such as a green tint, while a failure in AWB can often be perceived as the image having an incorrect color tint.

AWB correction is typically applied as part of an imaging pipeline embedded within an Image Signal Processor (ISP). The ISP can be physically attached to the same processing unit (System on Chip or SoC) as the imaging device. This allows a process associated with an AWB algorithm to access the image data via wired physical connections and correct the image data in a timely manner. In the case of artificial reality (XR) applications, more stringent requirements for power and latency make it challenging to run computationally expensive algorithms that demand large amounts of power. Thus, performing AWB correction using the same processing unit attached to the image sensor can be challenging. Accordingly, at least a portion of the computation involved in performing AWB correction can be offloaded to a companion computation device, such as a coprocessor, that is part of the XR system, where the companion computation device can communicate, in real-time, as part of a head-mounted device (HMD) or through a wired or wireless connection between the HMD another processing device.

Absent latency concerns, AWB correction could be performed as part of a distributed wireless XR system. Performing AWB in this distributed manner would enable XR products to perform AWB correction remotely while meeting the requirements for power and latency of the HMD. However, because at least a portion of the AWB correction process is not occurring at the same processing unit attached to the imaging device, delays due in part to wireless communication and larger wireless bandwidth requirements introduce this latency which can make performing AWB correction fully remotely in a distributed manner impracticable for XR systems.

In accordance with some implementations, a portion of the distributed AWB correction process can be applied to live or real-time video streams using lower-resolution images or frames. In contrast, another portion of the AWB correction process can be applied to high-resolution images or frames. The AWB correction algorithms are often too computationally costly to run on the HMD; however, generating the AWB statics is generally less costly and occupies less memory than operating on an original higher-resolution frame or image. For example, image data analysis to determine one or more configuration settings of an AWB correction algorithm can be performed at a device, such as the HMD device. The AWB correction algorithm can be performed at a coprocessing device external to the HMD, such as a local compute device, mobile phone, remote server, etc. That is, the AWB statistics generation process and AWB correction algorithm can be decoupled from one another, whereby the AWB statistics generation process can be executed on lower resolution frames or images at the HMD; the statistics generated by the AWB statistics generation process can then be transmitted from the HMD to the coprocessing device such that the AWB correction algorithm can be executed on the higher resolution frames or images. Accordingly, AWB correction can be performed on images and/or video in a distributed manner without sacrificing image quality.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

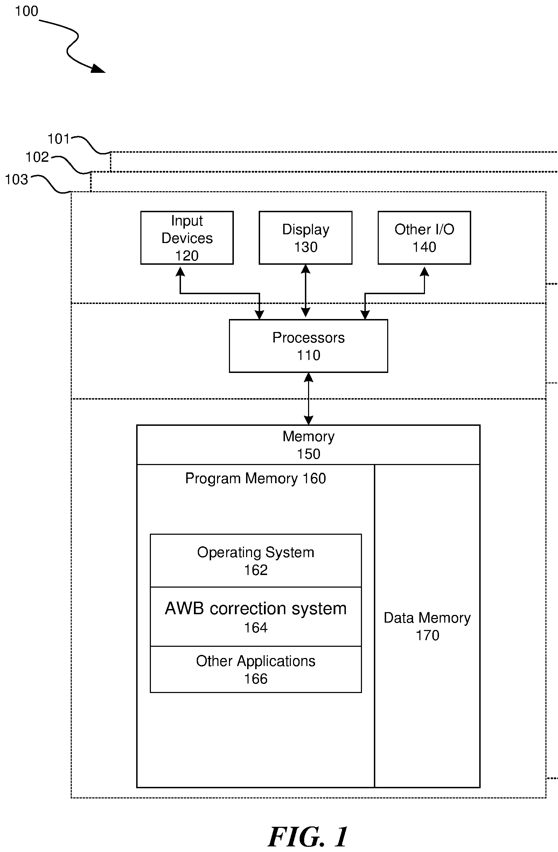

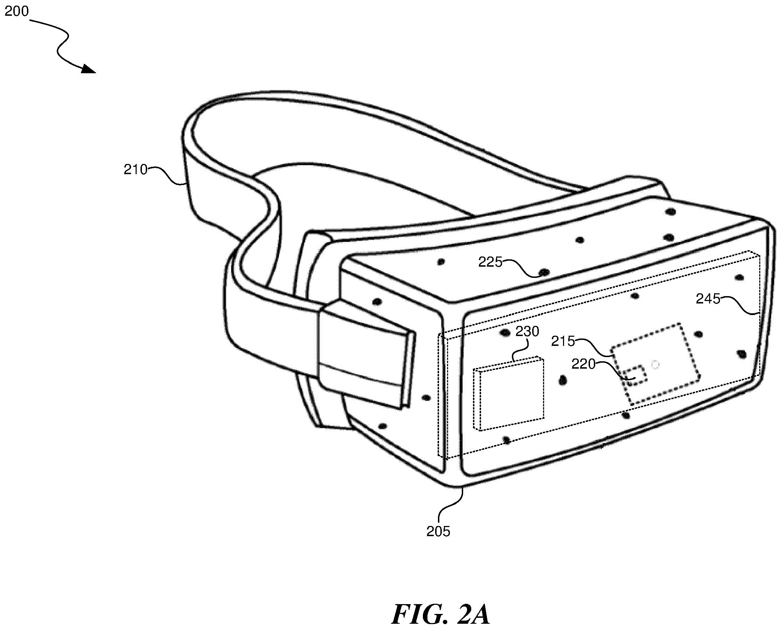

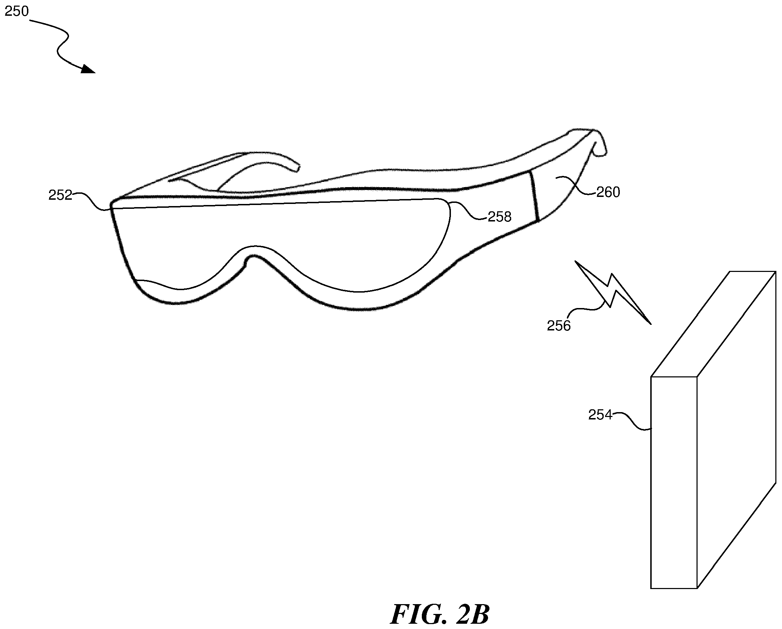

Several implementations are discussed below in more detail in reference to the figures. Figure 1 is a block diagram illustrating an overview of devices on which some implementations of the disclosed technology can operate. The devices can comprise hardware components of a computing system 100 that apply, in a distributed manner, Auto White Balance (AWB) correction techniques to images acquired at an imaging device. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, an AWB correction system 164, and other application programs 166. Memory 150 can also include data memory 170 which can include high and low-resolution images and video, AWB correction statistics, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various examples, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

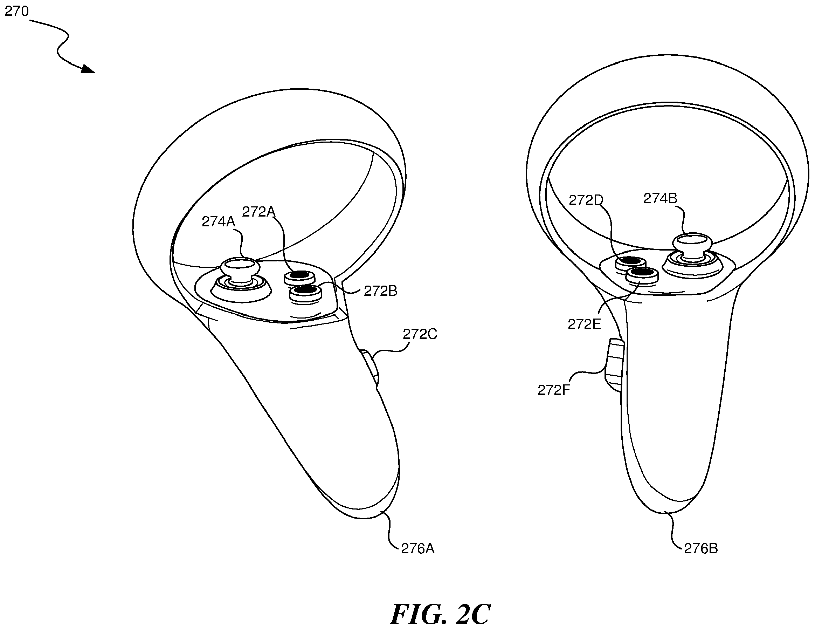

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

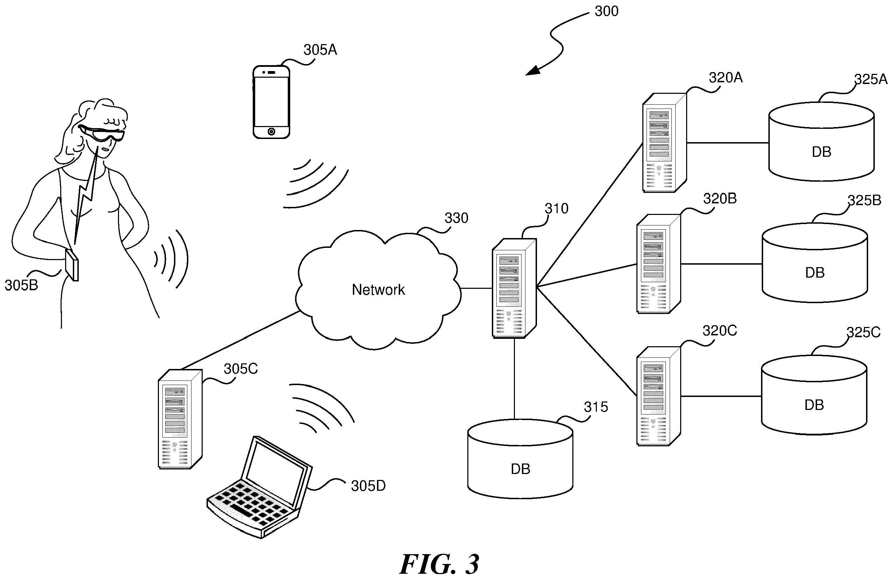

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

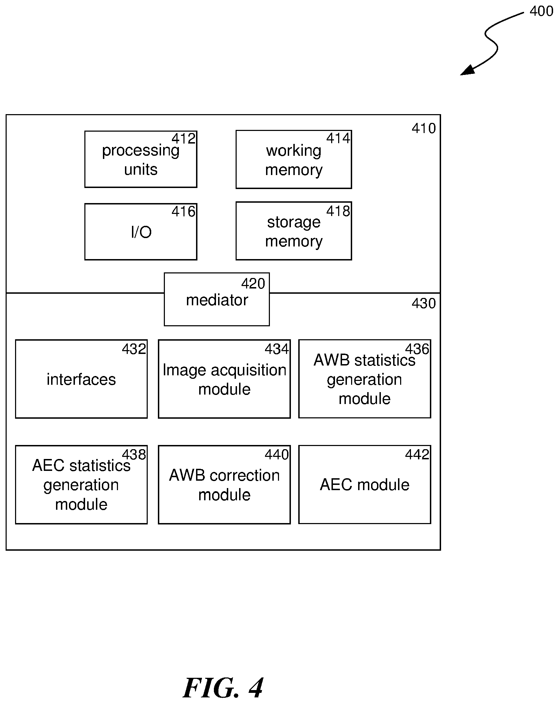

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for applying, in a distributed manner, Auto White Balance (AWB) correction techniques to images acquired at an imaging device. Specialized components 430 can include an image acquisition module 434, an AWB statistics generation module 436, an automated exposure correction (AEC) statistics generation module 438, an AWB correction module 440, an AEC module 442, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. For example, the AWB statistics generation module 436 can reside at an HMD 252, while the AWB correction module 440 can reside at a coprocessing device, such as device 254, other client computing devices 305, or remote devices 310 or 320. Although depicted as separate components, specialized components 430 may be logical or other nonphysical differentiations of functions and/or may be submodules or code-blocks of one or more applications.

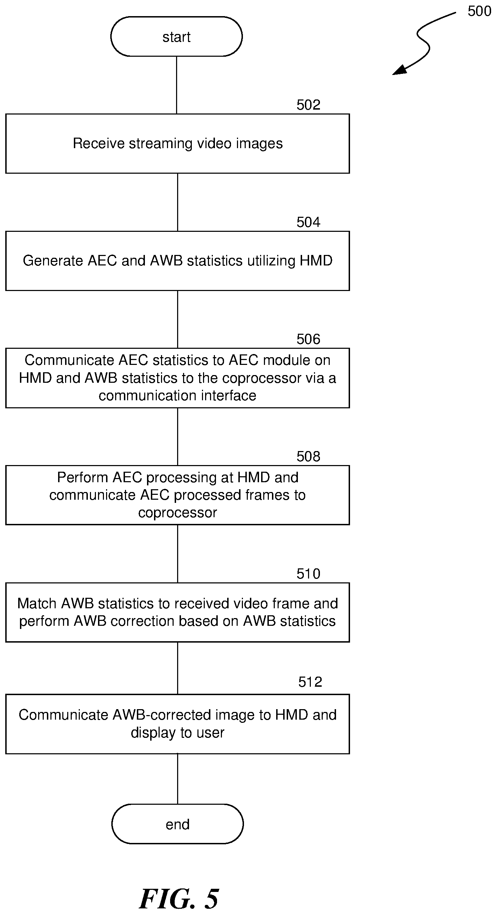

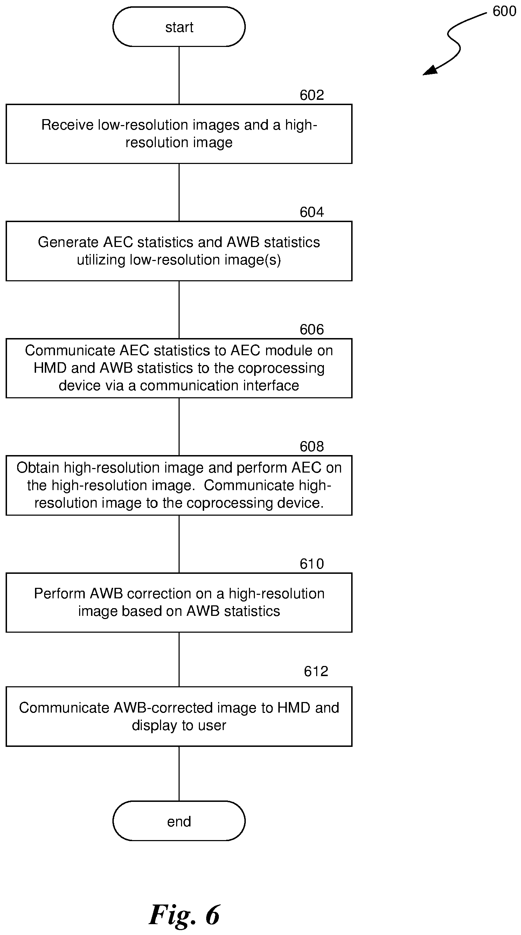

The image acquisition module 434 can acquire one or more images from an imaging device, such as a camera. In some examples, the image acquisition module 434 can acquire high-resolution images and/or low-resolution images. In some examples, the image acquisition module 434 can obtain a series of images, such as video. Alternatively, or in addition, the image acquisition module 434 can obtain a single high-resolution image. Additional details directed to acquiring images from an imaging device are provided below in relation to block 502 of Figure 5, block 602 of Figure 6, and Figures 7-8.

The AWB statistics generation module 436 can generate statistics on which the AWB corrections can be based. For example, the AWB statistics can include, but are not limited to, the ratio of red pixels to green pixels, and in some instances, the ratio of blue pixels to green pixels. In some examples, the AWB statistics can also include a distribution of red, green, and blue pixels throughout the image. In some implementations, the AWB statistics can be generated for the entirety of the image; alternatively, or in addition, the AWB statistics can be generated for one or more regions of the image. In general, however, the AWB statistics can be associated with an estimate of the ambient light temperature of the image. Additional details directed to generating AWB statistics are provided below in relation to block 504 of Figure 5, block 604 of Figure 6, and Figures 7-8.

The AWB correction module 440 can perform AWB correction processing, including determining a change to one or more pixel values in the image. Accordingly, based on the AWB statistics received from the AWB statistics generation module 436, the computations associated with determining changes to one or more pixel values can be performed by the coprocessing device without the image being present. The AWB correction module 440 can then apply the changes to the received high-resolution image, resulting in an AWB-corrected high-resolution image. Additional details directed to performing AWB correction processing are provided below in relation to blocks 506-510 of Figure 5, blocks 606-610 of Figure 6, and Figures 7-8.

The AEC statistics generation module 438 can generate AEC statistics which can include but are not limited to, the mean brightness of the image, the standard deviation of one or more pixel values in the image, histogram or distribution of pixel values across the image, image contrast, image saturation, and image exposure time. The AEC module 442 can apply processing to an image to determine one or more adjustment parameters, such as exposure time and/or gain, that can be returned to the imaging device. In examples, one or more adjustment parameters can be an actual exposure time and/or actual gain setting or can be a change to the exposure time or change to the gain setting. Accordingly, the imaging device can incorporate the adjustments to acquire a subsequent image, which may be a high-resolution image. Additional details directed to generating AEC statistics and performing AEC processing are provided below in relation to blocks 504-508 of Figure 5, blocks 604-608 of Figure 6, and Figures 7-8.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating process 500 used in some implementations for performing distributed AWB correction on streaming or real-time video. In some implementations, process 500 is initiated at a user's request. For example, a user can indicate that they would like an HMD to record video or otherwise view video acquired from an imaging device associated with the HMD. Accordingly, at block 502, the imaging device can provide streaming video, including images or frames, to the HMD.

At block 504, process 500 can generate AEC statistics and AWB statistics based on an image, or frame, of the streaming video. The image, or frame, can be at a resolution that allows the image, or frame, to be wired orwirelessly transmitted from the HMD to the coprocessing device and/or from the coprocessing device to the HMD, in accordance with one or more latency limitations of the connection. In some examples, the resolution of the image or frame may need to be reduced to comply with one or more limitations of the connection. In examples, the AEC statistics can include, but are not limited to mean brightness of the image, standard deviation of one or more pixel values in the image, histogram or distribution of pixel values across the image, image contrast, image saturation, and image exposure time. The AWB statistics can include but are not limited to the ratio of red pixels to green pixels, and in some instances, the ratio of blue pixels to green pixels. In some examples, the AWB statistics can also include a distribution of red, green, and blue pixels throughout the image. In some implementations, the AWB statistics can be generated for the entirety of the image; alternatively, or in addition, the AWB statistics can be generated for one or more regions of the image. In general, however, the AWB statistics can be associated with an estimate of the ambient light temperature of the image.

At block 506, the AEC statistics can be provided to the AEC module. Further, the AWB statistics can be communicated, via a wired or wireless communication interface, to the coprocessing device located external to the HMD (e.g., a local dedicated processing unit such as unit 305B, a local multi-purpose devices such as a mobile phone 305A, or a remote device such as a server 310 or 320). At block 508, the AEC module at the HMD can apply processing to the image to determine one or more adjustment parameters, such as exposure time and/or gain, which can be returned to the imaging device. In examples, one or more adjustment parameters can be an actual exposure time and/or actual gain setting or can be a change to the exposure time or change to the gain setting. Accordingly, the imaging device can incorporate the adjustments to acquire a subsequent image or frame of video.

At block 510, the coprocessing device can receive the image from the AEC module and match the image to previously received AWB statistics provided by the AWB statistics generation module. While shown as a single process, it should be understood that block 510 and 512 of process 500 may be performed on a separate coprocessing device from blocks 502-508, and thus may be separate processes. The AWB correction module can then perform AWB correction processing on the image. In examples, the AWB correction processing can include determining a change to one or more pixel values in the image. Accordingly, based on the AWB statistics received from the AWB statistics generation module, the computations associated with the changes to one or more pixel values can be performed without the image being present. The AWB correction module can then apply the changes to the received image, resulting in an AWB-corrected image, or frame, of video. Of course, it should be understood that the computations associated with the changes to one or more pixel values can be performed if the image is present. At block 512, the AWB-corrected image can then be output for display. In examples, the coprocessing device can wired or wirelessly transmit the AWB-corrected image back to the HMD for display to a user.

Figure 6 is a flow diagram illustrating process 600 used in some implementations for performing distributed AWB correction on a single high-resolution image captured by an imaging device. In some implementations, process 600 is initiated at a user's request. For example, a user can indicate that they would like an HMD to obtain an image, such as a high-resolution image, from an imaging device associated with the HMD. Accordingly, at block 602, the imaging device can acquire an image. Like process 500, a series of temporal data can be used to ensure the AWB correction process functions correctly. However, due to the high resolution of the images, acquiring multiple successive high-resolution images may not be feasible due to memory and power constraints of the imaging device and/or the HDM. Furthermore, it may not be feasible to transmit these high-resolution frames to the coprocessing device with acceptable latency. Thus, at block 602, a series of low-resolution images are acquired or streamed and utilized for AEC statistics generation and AWB statistics generation. However, the AEC module can obtain a high-resolution image to determine one or more automated exposure corrections utilizing the AEC statistics generated from low-resolution images. That is, AEC and AWB statistics can be generated using one or more low-resolution images; the AEC and AWB statistics for the low-resolution images can then be used to determine AEC and AWB processing that can occur on the high-resolution image. Stated another way, regions of the low-resolution image can be used to inform, via the AEC and AWB statistics generated from the low-resolution image, the regions of the high-resolution image that can be processed using an AWB correction process.

At block 604, process 600 can generate AEC statistics and AWB statistics based on the series of low-resolution images. In examples, the AEC statistics can include, but are not limited to mean brightness of the image, standard deviation of one or more pixel values in the image, histogram, or distribution of pixel values across the image, image contrast, image saturation, and image exposure time. The AWB statistics can include but are not limited to the ratio of red pixels to green pixels and in some instances, the ratio of blue pixels to green pixels. In some examples, the AWB statistics can also include a distribution of red, green, and blue pixels throughout the image. In some implementations, the AWB statistics can be generated for the entirety of the image; alternatively, or in addition, the AWB statistics can be generated for one or more regions of the image. In general, however, the AWB statistics can be associated with an estimate of the ambient light temperature of the image.

At block 606, the AEC statistics can be provided to the AEC module. Further, the AWB statistics can be communicated, via a wired or wireless communication interface, to the coprocessing device located external to the HMD (e.g., a local dedicated processing unit such as unit 305B, a local multi-purpose devices such as a mobile phone 305A, or a remote device such as a server 310 or 320). That is, a series of AWB statistics can be transmitted to the coprocessing device a few frames before a high-resolution image is captured. This allows the AWB correction process to determine a correct decision, or application of AWB, using minimal bandwidth. AWB correction can be performed once the high-resolution image is transmitted to the coprocessing device.

At block 608, the AEC module can apply processing to a high-resolution image acquired from the imaging device to determine one or more adjustment parameters, such as exposure time and/or gain, that can be returned to the imaging device. In examples, one or more adjustment parameters can be an actual exposure time and/or actual gain setting or can be a change to the exposure time or change to the gain setting. Accordingly, the imaging device can incorporate the adjustments to acquire a subsequent image, which can be a high-resolution image.

At block 610, the coprocessing device can receive the high-resolution image from the AEC module and perform AWB correction processing on the high-resolution image based on the previously communicated AWB statistics generated for low-resolution images. While shown as a single process, it should be understood that block 610 and 612 of process 600 may be performed on a separate coprocessing device from blocks 602-608, and thus may be separate processes. In examples, the AWB correction processing can include determining a change to one or more pixel values in the high-resolution image. Accordingly, based on the AWB statistics received from the AWB statistics generation module, the computations associated with the changes to one or more pixel values can be performed without the high-resolution image being present. The AWB correction module can then apply the changes to the received high-resolution image, resulting in an AWB-corrected image. Of course, it should be understood that the computations associated with the changes to one or more pixel values can be performed if the high-resolution image is present. At block 612, the AWB-corrected image can then be output for display. In examples, the coprocessing device can transmit the AWB-corrected image back to the HMD for display to a user.

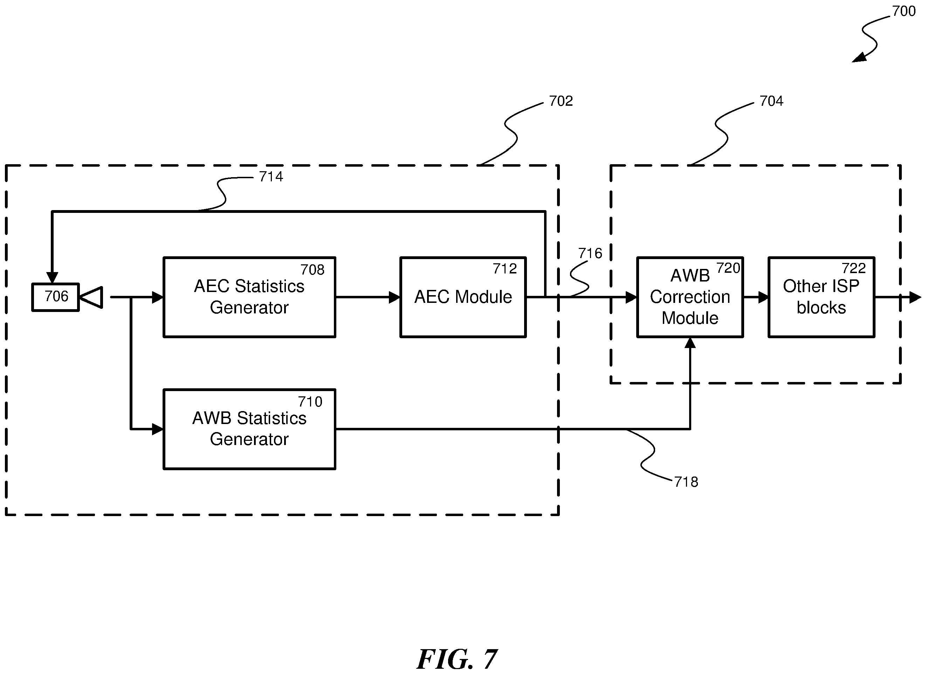

Figure 7 is a conceptual diagram depicting a system 700 for performing distributed AWB correction used in some implementations. The system 700 can include an HMD 702 and a coprocessing device 704. One or more images acquired from imaging device 706 can be provided to the AEC statistics generator 708 and the AWB statistics generator 710. The image, or frame, can be at a resolution that allows the image, or frame, to be wired or wirelessly transmitted from the HMD 702 to the coprocessing device 704 and/or from the coprocessing device 704 to the HMD 702, in accordance with one or more limitations of the connection. In some examples, the resolution of the image or frame may be reduced to comply with one or more limitations of the connection.

The AEC statistics generator 708 can generate AEC statistics which can include, but are not limited to, the mean brightness of the image, the standard deviation of one or more pixel values in the image, histogram or distribution of pixel values across the image, image contrast, image saturation, and image exposure time. The AEC statistics can be provided to the AEC module 712. The AEC module 712 can apply processing to the image to determine one or more adjustment parameters, such as exposure time and/or gain, that can be returned, via communication pathway 714, to the imaging device 706. In examples, one or more adjustment parameters can be an actual exposure time and/or actual gain setting or can be a change to the exposure time or change to the gain setting. Accordingly, imaging device 706 can incorporate the adjustments to acquire a subsequent image or frame of video.

The AWB statistics generated by the AWB statistics generator 710 can be communicated, via a wireless communication link 718, to the AWB correction module 720 located at the coprocessing device 704. The AWB statistics can include but are not limited to the ratio of red pixels to green pixels, and in some instances, the ratio of blue pixels to green pixels. In some examples, the AWB statistics can also include a distribution of red, green, and blue pixels throughout the image. In some implementations, the AWB statistics can be generated for the entirety of the image; alternatively, or in addition, the AWB statistics can be generated for one or more regions of the image. In general, however, the AWB statistics can be associated with an estimate of the ambient light temperature of the image.

The AWB correction module 720 can then perform AWB correction processing on an image received from the AEC module 712, via the wired or wireless communication link 716, by matching the received image to previously received AWB statistics provided by the AWB statistics generator 710. The communication link 716 can be the same as or different from the communication link 718. In examples, the AWB correction module 720 can perform processing that includes determining a change to one or more pixel values in the image. Accordingly, based on the AWB statistics received from the AWB statistics generator 710, the computations associated with determining changes to one or more pixel values can be performed by the coprocessing device 704 without the image being present. The AWB correction module 720 can then apply the changes to the received image, resulting in an AWB-corrected image, or frame, of video. Of course, it should be understood that the computations associated with the changes to one or more pixel values can be performed if the image is present. The AWB correction module 720 can then provide the AWB-corrected image to one or more other ISP blocks 722 for additional processing. The resulting image provided by the one or more other ISP blocks 722 can be wired or wirelessly transmitted back to the HMD for display to a user.

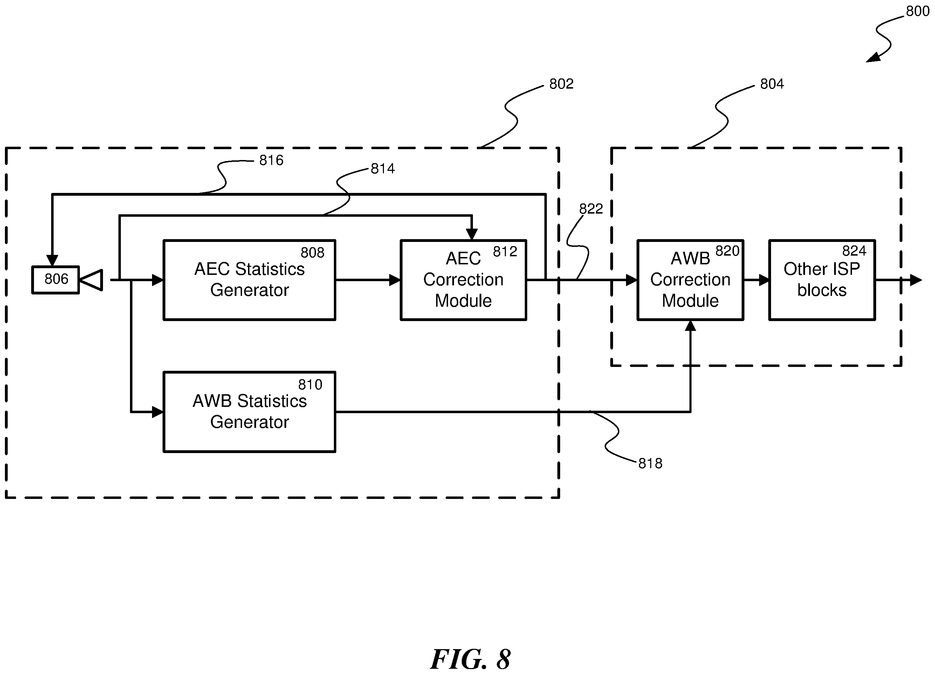

Figure 8 is a conceptual diagram depicting system 800 for performing distributed AWB correction on high-resolution still images used in some implementations. System 800 can include an HMD 802 and a coprocessing device 804. One or more images acquired from the imaging device 806 can be provided to the AEC statistics generator 808 and the AWB statistics generator 810. In examples, the one or more images can be a series of low-resolution images (e.g., streamed images). Thus, the statistics generated by the AEC statistics generator 708 and the AWB statistics generator 810 are based on a series of low-resolution images.

The AEC statistics generator 808 can generate AEC statistics which can include, but is not limited to, the mean brightness of the image, the standard deviation of one or more pixel values in the image, histogram or distribution of pixel values across the image, image contrast, image saturation, and image exposure time. The AEC statistics can be provided to the AEC module 812. The AEC module 812 can acquire a high-resolution image 814 from the imaging device 806 and apply processing to the image to determine one or more adjustment parameters, such as exposure time and/or gain, that can be returned, via communication pathway 816, to the imaging device 806. In examples, one or more adjustment parameters can be an actual exposure time and/or actual gain setting or can be a change to the exposure time or change to the gain setting. Accordingly, imaging device 806 can incorporate the adjustments to acquire a subsequent image, which may be a high-resolution image.

The AWB statistics generated by the AWB statistics generator 810 can be communicated, via a wired or wireless communication link 818, to the AWB correction module 820 located at the coprocessing device 804. The AWB statistics can include but are not limited to the ratio of red pixels to green pixels, and in some instances, the ratio of blue pixels to green pixels. In some examples, the AWB statistics can also include a distribution of red, green, and blue pixels throughout the image. In some implementations, the AWB statistics can be generated for the entirety of the image; alternatively, or in addition, the AWB statistics can be generated for one or more regions of the image. In general, however, the AWB statistics can be associated with an estimate of the ambient light temperature of the image.

The AWB correction module 820 can then perform AWB correction processing on the high-resolution image received from the AEC module 812, via the communication link 822. The communication link 818 can be the same as or different from the communication link 822. In examples, the AWB correction module 820 can perform processing that includes determining a change to one or more pixel values in the image. Accordingly, based on the AWB statistics received from the AWB statistics generator 810, the computations associated with determining changes to one or more pixel values can be performed by the coprocessing device 804 without the image being present. The AWB correction module 820 can then apply the changes to the received high-resolution image, resulting in an AWB-corrected high-resolution image. Of course, it should be understood that the computations associated with the changes to one or more pixel values can be performed if the image is present. The AWB correction module 820 can then provide the AWB-corrected image to one or more other ISP blocks 824 for additional processing. The resulting image provided by the one or more other ISP blocks 824 can be transmitted back to the HMD for display to a user and/or stored at a storage location.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific examples and implementations have been described herein for purposes of illustration, but various modifications can be made without deviating from the scope of the examples and implementations. The specific features and acts described above are disclosed as example forms of implementing the claims that follow. Accordingly, the examples and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

In some implementations, the technology can include a method which performed the following steps, a computer-readable storage medium storing instructions that, when executed by a computing system, cause the computing system to perform a process including the following steps, or a computing system including one or more processors and one or more memories storing instructions that, when executed by the one or more processors, cause the computing system to perform a process including the following steps: receiving an image from an imaging device of a head-mounted display device; obtaining a resource requirement associated with an auto white balance correction process for the image; determining, using the resource requirement, that an amount of resources for performing the auto white balance correction process are unavailable; based on the determination that the amount of resources for performing the auto white balance correction process are unavailable, performing a distributed auto white balance correction by: A) obtaining a low-resolution image of the image acquired from the imaging device; B) generating auto white balance correction statistics using the low-resolution image; and C) providing the image and the auto white balance correction statistics for the low-resolution image to a coprocessing device via a network connection, wherein the coprocessing device is external to the head-mounted display device; and receiving, by the head-mounted display device, an auto white balance corrected image.

## Claims

1. A method for performing distributed auto white balance corrections on an image acquired from an imaging device of a head-mounted display, the method comprising:
receiving, at a coprocessing device via a network connection, the image from the imaging
device of the head-mounted display which is external to the coprocessing device,
wherein the head-mounted display had applied automated exposure correction to the received image; and
wherein the head-mounted display locally generates auto white balance correction statistics for a version of the image, without the automated exposure correction applied to that version of the image, and provides the auto white balance correction statistics, via the network connection, to the coprocessing device;
receiving, at the coprocessing device and separate from receiving the image, the auto
white balance correction statistics generated by the head-mounted display; and applying, by the coprocessing device, at least one auto white balance correction technique
to the image based on the received auto white balance correction statistics.

2. The method of claim 1, further comprising providing the auto white balance corrected image back to the head-mounted display for output.

3. The method of claim 1 or 2, wherein:
the auto white balance correction statistics are generated, by the head-mounted display, for the version of the image that is a first-resolution image; and
a resolution of the image received from the imaging device is greater than a resolution of the first-resolution image.

4. The method of claim 3, wherein the generated auto white balance correction statistics are generated to make adjustments, for the higher resolution set of pixels in the image received from the imaging device, based on the version of the image that is at the first-resolution.

5. The method of any preceding claim, wherein the generated auto white balance correction statistics include one or more of: a ratio of red pixels to green pixels; a ratio of blue pixels to green pixels; a distribution of red, green, and blue pixels throughout the image; an estimate of the ambient light temperature of the image; or any combination thereof.

6. The method of any preceding claim, wherein the version of the image, for which the auto white balance correction statistics are generated, is a region of the image which is less than the entire image.

7. The method of any preceding claim, wherein the applied automated exposure correction includes generating one or more automated exposure correction statistics including one or more of: mean brightness of the image; standard deviation of one or more pixel values in the image; histogram or distribution of pixel values across the image; image contrast; image saturation; image exposure time; or any combination thereof.

8. The method of any preceding claim, wherein the applied automated exposure correction determines an exposure time and/or gain, that is provided to the imaging device and used by the imaging device to acquire one or more subsequent images.

9. A computer-readable storage medium storing instructions that, when executed by a computing system, cause the computing system to carry out the method of any preceding claim.

10. A computer-readable storage medium storing instructions that, when executed by a computing system, cause the computing system to carry out the method of any of claims 1 to 8.

11. A computer program product comprising instructions which, when the program is executed by a computer, cause the computer to carry out the method of any of claims 1 to 8.
